# EUROPEAN PATENT SPECIFICATION

(11) **EP 3 225 389 B1**
(45) Date of publication and mention of the grant of the patent: **13.11.2019**
(21) Application number: 17158789.2
(22) Date of filing: 02.03.2017
(51) Int. Cl.: B32B 1/08, B32B 25/00, B32B 25/14, B32B 25/16, F16L 11/04, F16L 11/06

(54) **RUBBER TUBE, AND METHOD OF PRODUCING THE SAME**
KAUTSCHUKSCHLAUCH UND VERFAHREN ZUR HERSTELLUNG DAVON
TUBE EN CAOUTCHOUC ET SON PROCÉDÉ DE PRODUCTION

(30) Priority: 14.03.2016 JP 2016050032
(43) Date of publication of application: 04.10.2017
(73) Proprietor: Sumitomo Rubber Industries, Ltd., Kobe-shi, Hyogo-ken (JP)
(72) Inventor: FUJIMOTO, Kentaro, Kobe-shi, Hyogo 651-0072 (JP); ISHIMARU, Takeshi, Kobe-shi, Hyogo 651-0072 (JP)
(74) Representative: Manitz Finsterwald Patent- und Rechtsanwaltspartnerschaft mbB

(56) References cited:
- US-A1- 2002 031 628
- US-A1- 2014 228 774

## Description

### [TECHNICAL FIELD]

The present invention relates to a rubber tube, and a method of producing the rubber tube. Particularly, the invention relates to a rubber tube formed of a fluororubber. The features of the preamble of the independent claims are known from US 2002/031628 A1. Related technology is known from US 2014/228774 A1.

### [BACKGROUND ART]

In general, fluororubbers are highly adhesive. Therefore, a tube formed of such a fluororubber is liable to have a lower liquid feed capability due to the adhesiveness of the fluororubber in an application such as of a tube pump in which the tube is repeatedly collapsed during use. The lower liquid feed capability means a lower liquid feed rate or lower liquid feed responsiveness which is attributable to the fact that a longer period of time is required for restoration of the tube from a collapsed state to its original shape.

The fluororubbers are used in a wide variety of applications because of their higher heat resistance and higher chemical resistance, but their higher adhesiveness is disadvantageous. If there is a need for quickly feeding a minute amount of fluid in the application of the tube pump, poorer restorability of the tube attributable to the adhesiveness is problematic.

To cope with this problem, Patent Document 1 and Patent Document 2 propose tubes each including a PTFE resin layer provided on an inner side thereof for reduction of the adhesiveness.

### [CITATION LIST]

### [PATENT DOCUMENT]

[PATENT DOCUMENT 1] JP2002-502735A
[PATENT DOCUMENT 2] JP2008-30471A

### [SUMMARY OF THE INVENTION]

### [PROBLEM TO BE SOLVED BY THE INVENTION]

The tubes proposed in Patent Document 1 and Patent Document 2 each have a multi-layer structure, so that a tube production process is problematically complicated. Further, separation of layers is also problematic.

In view of the foregoing, the present invention is directed to the reduction of the adhesiveness of the rubber tube. Particularly, it is an object of the present invention to reduce the adhesiveness of the fluororubber without changing the polymer type and the formulation of the fluororubber.

### [SOLUTION TO PROBLEM]

According to an inventive aspect, there is provided a rubber tube, as defined in the independent product claim, having an inner surface roughened so that the ratio (R/D) of an inner surface roughness R of the tube to the inner diameter D of the tube is not less than a predetermined level.

The roughened inner surface preferably includes an inner surface portion of a collapsible part of the tube.

The inner surface roughness R includes surface roughness parameter Rz (maximum height), Rp (maximum peak height), Rv (maximum valley depth), Ra (arithmetic average roughness) or Rq (root mean square height) specified in JIS B0601.

In the present invention, a material for the rubber tube is preferably a fluororubber, particularly preferably FKM.

According to another inventive aspect, there is provided a method of producing a rubber tube as defined in the independent method claim, the method including the steps of: preparing an outer mold defining an outer shape of the tube and an inner core rod defining an inner surface geometry of the tube; placing the inner core rod along a center line of the outer mold; and molding the rubber tube by the outer mold and the inner core rod; wherein the inner core rod has a surface portion roughened to a predetermined roughness.

The surface portion of the inner core rod is preferably roughened, for example, by a shot blast process, and a blasting material for the shot blast process is preferably glass beads.

In the present invention, the surface roughness parameter Rz (maximum height), Rp (maximum peak height), Rv (maximum valley depth), Ra (arithmetic average roughness) or Rq (root mean square height) specified in JIS B0601 is used as the surface roughness parameters but, instead, surface roughness parameters Sz (maximum height), Sp (maximum peak height), Sv (maximum valley depth), Sa (arithmetic average roughness) and Sq (root mean square height) specified in ISO 25178 may be used.

### [EFFECTS OF THE INVENTION]

According to the present invention, the adhesiveness of the rubber tube, particularly the adhesiveness of the fluororubber tube, can be reduced. Therefore, where the rubber tube is used for a tube pump, the performance of the tube pump can be improved. Further, the inventive rubber tube can be used as a pinch valve tube.

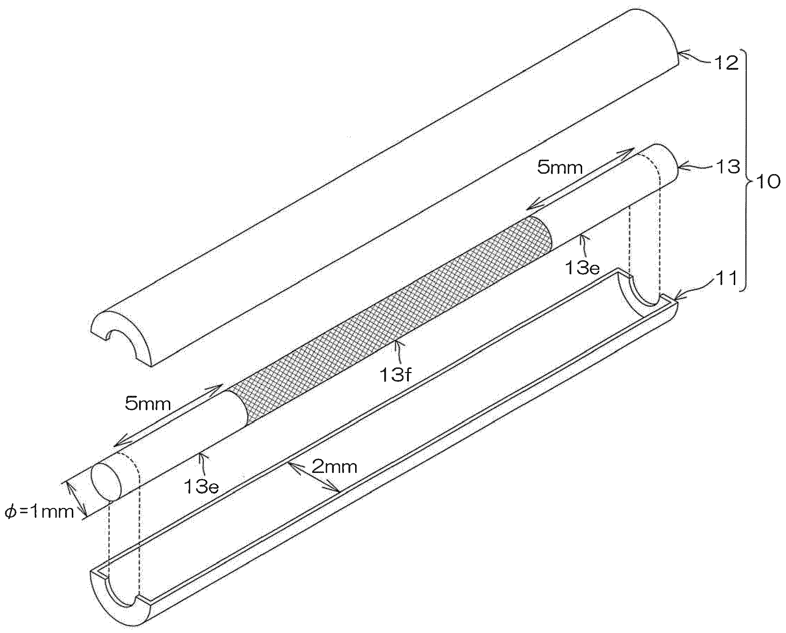

### [BRIEF DESCRIPTION OF THE DRAWING]

FIGURE is a schematic perspective view illustrating a mold for molding a rubber tube according to one embodiment of the present invention.

### [EMBODIMENTS OF THE INVENTION]

Embodiments of the present invention will hereinafter be described specifically.

### <Mold>

FIGURE is a schematic perspective view illustrating a mold 10 for molding a rubber tube according to one embodiment of the present invention.

The mold 10 includes a lower mold 11, an upper mold 12 and an inner core rod 13 as its constituents. The mold 10 is a mold for molding a rubber tube having an inner diameter of 1 mm and an outer diameter of 2 mm. The surface (peripheral surface) of the inner core rod 13 is to be in contact with an inner surface of the molded rubber tube to define the inner surface geometry of the molded rubber tube.

The inner core rod 13 is a metal rod having a diameter of 1 mm. The surface of the inner core rod 13 is mirror-polished, and then a surface portion 13f of the inner core rod excluding end portions is properly roughened, for example, by a shot blast process.

A metal blasting material, a ceramic blasting material, a resin blasting material or a glass blasting material may be used for the shot blast process. The glass blasting material is particularly preferred because the surface of the inner core rod 13 is not contaminated.

The surface end portions 13e of the inner core rod 13 correspond to end portions of the molded rubber tube, and are not necessarily required to be shot-blasted. More specifically, the surface end portions (each having a width of about 5 mm) of the inner core rod 13 which are to be in contact with inner surface end portions of the molded rubber tube are not shot-blasted, but remain as mirror-polished surface portions 13e.

The rubber tube is molded from a fluororubber in the mold 10 including the inner core rod 13, whereby the rubber tube is produced with at least a middle portion of the inner surface thereof roughened.

Similarly, inner surfaces of the upper mold 12 and the lower mold 11 which are to be in contact with the outer surface of the tube may be roughened as required.

### [EXAMPLES]

### <Production Method>

Inner core rods 13 having different surface roughnesses for molds 10 were each prepared by shot-blasting a surface portion 13f of the inner core rod 13 of the mold 10 corresponding to an inner surface of a tube.

A fluororubber composition was prepared by kneading a vulcanizing agent, carbon, calcium hydroxide and a magnesium salt in predetermined proportions together with Du Pont's fluororubber Viton A700. Then, the fluororubber composition was press-molded at 177°C in the molds 10, and further secondarily vulcanized at 232°C at 24 hours. Thus, intended fluororubber tubes each having an inner diameter of 1 mm and an outer diameter of 2 mm were produced.

### <Specifications for Examples and Comparative Examples>

The surface roughnesses (Rp, Rv, Rz, Ra, Rq) of the inner surface of a collapsible part of each of the tubes (each having an inner diameter of 1 mm and an outer diameter of 2 mm) produced by using the inner core rods 13 having different surface roughnesses in Comparative Examples and Examples, and the ratios of the respective surface roughnesses (Rp, Rv, Rz, Ra, Rq) to the inner diameter D are shown below.

### [Comparative Example 1]

Rp = 8.4 µm (Rp/D = 0.0084), Rv = 9.7 µm (Rv/D = 0.0097), Rz = 18.2 µm (Rz/D = 0.018), Ra = 2.0 µm (Ra/D = 0.0020), Rq = 2.6 µm (Rq/D = 0.0026), and a restoration response time of 884 milliseconds

### [Comparative Example 2]

Rp = 11.6 µm (Rp/D = 0.012), Rv = 13.1 µm (Rv/D = 0.013), Rz = 24.7 µm (Rz/D = 0.025), Ra = 3.0 µm (Ra/D = 0.0030), Rq = 3.9 µm (Rq/D = 0.0039), and a restoration response time of 886 milliseconds

### [Example 1]

Rp = 19.1 µm (Rp/D = 0.019), Rv = 18.7 µm (Rv/D = 0.019), Rz = 37.8 µm (Rz/D = 0.038), Ra = 3.6 µm (Ra/D = 0.0036), Rq = 4.6 µm (Rq/D = 0.0046), and a restoration response time of 161 milliseconds

### [Example 2]

Rp = 19.7 µm (Rp/D = 0.020), Rv = 19.7 µm (Rv/D = 0.020), Rz = 39.4 µm (Rz/D = 0.039), Ra = 4.3 µm (Ra/D = 0.0043), Rq = 5.2 µm (Rq/D = 0.0052), and a restoration response time of 154 milliseconds

### [Example 3]

Rp = 21.3 µm (Rp/D = 0.021), Rv = 23.6 µm (Rv/D = 0.024), Rz = 44.9 µm (Rz/D = 0.045), Ra = 4.0 µm (Ra/D = 0.0040), Rq = 5.2 µm (Rq/D = 0.0052), and a restoration response time of 126 milliseconds

### [Example 4]

Rp = 22.8 µm (Rp/D = 0.023), Rv = 25.5 µm (Rv/D = 0.025), Rz = 48.3 µm (Rz/D = 0.048), Ra = 4.4 µm (Ra/D = 0.0044), Rq = 5.7 µm (Rq/D = 0.0057), and a restoration response time of 107 milliseconds

### [Example 5]

Rp = 22.4 µm (Rp/D = 0.022), Rv = 28.3 µm (Rv/D = 0.028), Rz = 50.6 µm (Rz/D = 0.051), Ra = 5.0 µm (Ra/D = 0.0050), Rq = 6.1 µm (Rq/D = 0.0061), and a restoration response time of 111 milliseconds

### [Example 6]

Rp = 26.0 µm (Rp/D = 0.026), Rv = 27.1 µm (Rv/D = 0.027), Rz = 53.1 µm (Rz/D = 0.053), Ra = 4.4 µm (Ra/D = 0.0044), Rq = 5.6 µm (Rq/D = 0.0056), and a restoration response time of 109 milliseconds

### [Example 7]

Rp = 33.2 µm (Rp/D = 0.033), Rv = 32.8 µm (Rv/D = 0.033), Rz = 66.0 µm (Rz/D = 0.066), Ra = 5.7 µm (Ra/D = 0.0057), Rq = 7.2 µm (Rq/D = 0.0072), and a restoration response time of 113 milliseconds

### <Test Method>

The fluororubber tubes were each attached to a pinch valve driven at 24 V by a solenoid and, with the valve closed (with the tube collapsed), an air pressure of 100 kPa was applied to the tube from an inlet.

The restoration response time is defined as a time period elapsed from a time point (0 second) at which the solenoid is energized to electrically open the valve to a time point at which a pressure gage provided at an outlet of the valve detects a predetermined pressure level.

If a longer period of time is required for the restoration of the tube to an open state from a collapsed state due to the adhesiveness of the tube, the restoration response time is longer.

It is noted that the surface roughnesses of the inner surface of each of the tubes were determined by longitudinally cutting the tube into halves and observing the inner surface of the tube by means of a Keyence's laser microscope VK-X100.

### <Test Results>

The results for Comparative Examples and Examples are collectively shown in Table 1.

**Table 1**

| | Comparative Example 1 | Comparative Example 2 | Example 1 | Example 2 | Example 3 | Example 4 | Example 5 | Example 6 | Example 7 |
|---|---|---|---|---|---|---|---|---|---|
| Rp (µm) | 8.4 | 11.6 | 19.1 | 19.7 | 21.3 | 22.8 | 22.4 | 26 | 33.2 |
| Rp/D | 0.0084 | 0.012 | 0.019 | 0.02 | 0.021 | 0.023 | 0.022 | 0.026 | 0.033 |
| Rv (µm) | 9.7 | 13.1 | 18.7 | 19.7 | 23.6 | 25.5 | 28.3 | 27.1 | 32.8 |
| Rv/D | 0.0097 | 0.013 | 0.019 | 0.02 | 0.024 | 0.025 | 0.028 | 0.027 | 0.033 |
| Rz (µm) | 18.2 | 24.7 | 37.8 | 39.4 | 44.9 | 48.3 | 50.6 | 53.1 | 66 |
| Rz/D | 0.018 | 0.025 | 0.038 | 0.039 | 0.045 | 0.048 | 0.051 | 0.053 | 0.066 |
| Ra (µm) | 2 | 3 | 3.6 | 4.3 | 4 | 4.4 | 5 | 4.4 | 5.7 |
| Ra/D | 0.0020 | 0.0030 | 0.0036 | 0.0043 | 0.0040 | 0.0044 | 0.0050 | 0.0044 | 0.0057 |
| Rq (µm) | 2.6 | 3.9 | 4.6 | 5.2 | 5.2 | 5.7 | 6.1 | 5.6 | 7.2 |
| Rq/D | 0.0026 | 0.0039 | 0.0046 | 0.0052 | 0.0052 | 0.0057 | 0.0061 | 0.0056 | 0.0072 |
| Restoration response time (msec) | 884 | 886 | 161 | 154 | 126 | 107 | 111 | 109 | 113 |

As apparent from the results shown in Table 1, the ratio (Rz/D) of the maximum height Rz of at least the part of the tube inner surface to the tube inner diameter D is preferably not less than 0.038, and the ratio (Rp/D) of the maximum peak height Rp of at least the part of the tube inner surface to the tube inner diameter D is preferably not less than 0.019. The ratio (Rv/D) of the maximum valley depth Rv of at least the part of the tube inner surface to the tube inner diameter D is preferably not less than 0.019, and the ratio (Ra/D) of the arithmetic average roughness Ra of at least the part of the tube inner surface to the tube inner diameter D is preferably not less than 0.0036. Further, the ratio (Rq/D) of the root mean square height Rq of at least the part of the tube inner surface to the tube inner diameter D is preferably not less than 0.0046.

This application corresponds to Japanese Patent Application No. 2016-050032 filed in the Japan Patent Office on March 14, 2016, the disclosure of which is incorporated herein by reference in its entirety.

## Claims

1. A rubber tube **characterized by** having an inner surface roughened so that a ratio R/D of an inner surface roughness R (as specified in JIS B0601) of the tube to an inner diameter D of the tube is not less than a predetermined level, where
in
the inner surface roughness R is a maximum height Rz, and a ratio Rz/D is not less than 0.038; or
the inner surface roughness R is a maximum peak height Rp, and a ratio Rp/D is not less than 0.019; or
the inner surface roughness R is a maximum valley depth Rv, and a ratio Rv/D is not less than 0.019; or
the inner surface roughness R is an arithmetic average roughness Ra, and a ratio Ra/D is not less than 0.0036; or
the inner surface roughness R is a root mean square height Rq, and a ratio Rq/D is not less than 0.0046.

2. The rubber tube according to claim 1, wherein the roughened inner surface includes an inner surface portion of a collapsible part of the tube.

3. The rubber tube according to claim 1, wherein a material for the tube is a fluororubber.

4. The rubber tube according to claim 3, wherein the fluororubber is FKM.

5. The rubber tube according to claim 1, which is a tube for a tube pump or a tube for a pinch valve.

6. A method of producing a rubber tube, the method comprising the steps of:
preparing an outer mold (11,12) defining an outer shape of the tube and an inner core rod (13) defining an inner surface geometry of the tube;
placing the inner core rod (13) along a center line of the outer mold (11,12); and
molding the rubber tube by the outer mold (11,12) and the inner core rod (13);
**characterized in that** the inner core rod (13) has a surface portion (13f) roughened to a predetermined roughness so that the rubber tube has an inner surface roughened with a ratio R/D of an inner surface roughness R of the tube to an inner diameter D of the tube being not less than a predetermined level,
wherein
the inner surface roughness R is a maximum height Rz, and a ratio Rz/D is not less than 0.038; or
the inner surface roughness R is a maximum peak height Rp, and a ratio Rp/D is not less than 0.019; or
the inner surface roughness R is a maximum valley depth Rv, and a ratio Rv/D is not less than 0.019; or
the inner surface roughness R is an arithmetic average roughness Ra, and a ratio Ra/D is not less than 0.0036; or
the inner surface roughness R is a root mean square height Rq, and a ratio Rq/D is not less than 0.0046.

7. The rubber tube producing method according to claim 6, wherein the roughened surface portion of the inner core rod is to be in contact with a part of an inner surface of the tube excluding 5-mm wide end portions of the tube.

8. The rubber tube producing method according to claim 6, wherein the surface portion of the inner core rod is roughened by a shot blast process.

9. The rubber tube producing method according to claim 8, wherein a blasting material for the shot blast process is glass beads.

## Patentansprüche

1. Gummischlauch, **dadurch gekennzeichnet, dass** er eine Innenfläche aufweist, die so aufgeraut ist, dass ein Verhältnis R/D einer Innenflächenrauheit R, wie sie in JIS B0601 spezifiziert ist, des Schlauchs zu einem Innendurchmesser D des Schlauchs nicht kleiner als ein vorgegebenes Niveau ist,
wobei
die Innenflächenrauheit R eine maximale Rautiefe Rz ist und ein Verhältnis Rz/D nicht kleiner als 0,038 ist; oder
die Innenflächenrauheit R eine Höhe der größten Profilspitze Rp ist und ein Verhältnis Rp/D nicht kleiner als 0,019 ist; oder
die Innenflächenrauheit R eine Tiefe des größten Profiltales Rv ist und ein Verhältnis Rv/D nicht kleiner als 0,019 ist; oder
die Innenflächenrauheit R ein arithmetischer Mittenrauwert Ra ist und ein Verhältnis Ra/D nicht kleiner als 0,0036 ist; oder
die Innenflächenrauheit R ein quadratischer Mittenrauwert Rq ist und ein Verhältnis Rq/D nicht kleiner als 0,0046 ist.

2. Gummischlauch nach Anspruch 1, wobei die aufgeraute Innenfläche einen Innenflächenabschnitt eines zusammenfaltbaren Teils des Schlauchs umfasst.

3. Gummischlauch nach Anspruch 1, wobei ein Material für den Schlauch ein Fluorkautschuk ist.

4. Gummischlauch nach Anspruch 3, wobei der Fluorkautschuk FKM ist.

5. Gummischlauch nach Anspruch 1, der ein Schlauch für eine Schlauchpumpe oder ein Schlauch für ein Quetschventil ist.

6. Verfahren zur Herstellung eines Gummischlauchs,
wobei das Verfahren die Schritte umfasst:
Herstellen einer Außenform (11, 12), die eine Außenform des Schlauchs definiert, und eines Innenkernstabs (13), der eine Innenflächengeometrie des Schlauchs definiert;
Platzieren des Innenkernstabs (13) entlang einer Mittellinie der Außenform (11, 12); und
Formen des Gummischlauchs durch die Außenform (11, 12) und den Innenkernstab (13);
**dadurch gekennzeichnet, dass** der Innenkernstab (13) einen Oberflächenabschnitt (13f) aufweist, der auf eine vorbestimmte Rauheit aufgeraut ist, so dass der Gummischlauch eine Innenfläche aufweist, die mit einem Verhältnis R/D einer Innenflächenrauheit R des Schlauchs zu einem Innendurchmesser D des Schlauchs aufgeraut ist, das nicht kleiner als ein vorgegebenes Niveau ist,
wobei
die Innenflächenrauheit R eine maximale Rautiefe Rz ist und ein Verhältnis Rz/D nicht kleiner als 0,038 ist; oder
die Innenflächenrauheit R eine Höhe der größten Profilspitze Rp ist und ein Verhältnis Rp/D nicht kleiner als 0,019 ist; oder
die Innenflächenrauheit R eine Tiefe des größten Profiltales Rv ist und ein Verhältnis Rv/D nicht kleiner als 0,019 ist; oder
die Innenflächenrauheit R ein arithmetischer Mittenrauwert Ra ist und ein Verhältnis Ra/D nicht kleiner als 0,0036 ist; oder
die Innenflächenrauheit R ein quadratischer Mittenrauwert Rq ist und ein Verhältnis Rq/D nicht kleiner als 0,0046 ist.

7. Gummischlauchherstellungsverfahren nach Anspruch 6, wobei der aufgeraute Oberflächenabschnitt des Innenkernstabs mit einem Teil einer Innenfläche des Schlauchs in Kontakt sein soll, wobei 5 mm breite Endabschnitte des Schlauchs ausgenommen sind.

8. Gummischlauchherstellungsverfahren nach Anspruch 6, wobei der Oberflächenabschnitt des Innenkernstabs durch ein Kugelstrahlverfahren aufgeraut wird.

9. Gummischlauchherstellungsverfahren nach Anspruch 8, wobei ein Strahlmaterial für den Kugelstrahlprozess Glasperlen sind.

## Revendications

1. Tuyau en caoutchouc **caractérisé en ce qu'**il présente une surface intérieure rendue rugueuse de sorte qu'un rapport R/D d'une rugosité de surface intérieure R (telle que spécifiée dans la norme JIS B0601) du tuyau sur un diamètre intérieur (D) du tuyau n'est pas inférieur à un niveau prédéterminé,
dans lequel
la rugosité de surface intérieure R est une hauteur maximum Rz, et un rapport Rz/D n'est pas inférieur à 0,038 ; ou
la rugosité de surface intérieure R est une hauteur de pic maximum Rp, et un rapport Rp/D n'est pas inférieur à 0,019 ; ou
la rugosité de surface intérieure R est une profondeur de vallée maximum Rv, et un rapport Rv/D n'est pas inférieur à 0,019 ; ou
la rugosité de surface intérieure R est une rugosité moyenne arithmétique Ra, et un rapport Ra/D n'est pas inférieur à 0,0036 ; ou
la rugosité de surface intérieure R est une hauteur à la racine des moindres carrés Rq, et un rapport Rq/D n'est pas inférieur à 0,0046.

2. Tuyau en caoutchouc selon la revendication 1, dans lequel la surface intérieure rugueuse inclut une portion de surface intérieure d'une partie du tuyau susceptible d'être écrasée.

3. Tuyau en caoutchouc selon la revendication 1, dans lequel un matériau pour le tube est un caoutchouc fluoré.

4. Tuyau en caoutchouc selon la revendication 3, dans lequel le caoutchouc fluoré est du FKM.

5. Tuyau en caoutchouc selon la revendication 1, qui est un tuyau pour une pompe à tuyau ou un tuyau pour une valve à pincement.

6. Procédé pour produire un tuyau en caoutchouc, le procédé comprenant les étapes consistant à :
préparer un moule extérieur (11, 12) définissant une forme extérieure du tuyau et une tige centrale intérieure (13) définissant une géométrie de surface intérieure du tuyau ;
placer la tige centrale intérieure (13) le long d'une ligne centrale du moule extérieur (11, 12) ; et
mouler le tuyau en caoutchouc par le moule extérieur (11, 12) et la tige centrale intérieure (13) ;
**caractérisé en ce que** la tige centrale intérieure (13) a une portion de surface (13f) rendue rugueuse à une rugosité prédéterminée de telle façon que le tuyau en caoutchouc a une surface intérieure rugueuse avec un rapport L/D d'une rugosité de surface intérieure R du tuyau sur un diamètre intérieur D du tuyau qui n'est pas inférieur à un niveau prédéterminé,
dans lequel
la rugosité de surface intérieure R est une hauteur maximum Rz, et un rapport Rz/D n'est pas inférieur à 0,038 ; ou
la rugosité de surface intérieure R est une hauteur de pic maximum Rp, et un rapport Rp/D n'est pas inférieur à 0,019 ; ou
la rugosité de surface intérieure R est une profondeur de vallée maximum Rv, et un rapport Rv/D n'est pas inférieur à 0,019 ; ou
la rugosité de surface intérieure R est une rugosité moyenne arithmétique Ra, et un rapport Ra/D n'est pas inférieur à 0,0036 ; ou
la rugosité de surface intérieure R est une hauteur à la racine des moindres carrés Rq, et un rapport Rq/D n'est pas inférieur à 0,0046.

7. Procédé de production de tuyau en caoutchouc selon la revendication 6, dans lequel la portion de surface rugueuse de la tige centrale intérieure est destinée à être en contact avec une partie d'une surface intérieure du tuyau à l'exclusion de portions terminales du tube sur une largeur de 5 mm.

8. Procédé de production de tuyau en caoutchouc selon la revendication 6, dans lequel la portion de surface de la tige centrale intérieure est rendue rugueuse par un processus de grenaillage.

9. Procédé de production de tuyau en caoutchouc selon la revendication 8, dans lequel un matériau de grenaillage pour le processus de grenaillage est formé de billes de verre.
